# EUROPEAN PATENT APPLICATION

(11) **EP 1 241 645 A2**
(43) Date of publication of application: **18.09.2002**
(21) Application number: 02251805.4
(22) Date of filing: 13.03.2002
(51) Int. Cl.: G07F 19/00

(54) **On-line cash withdrawal and financial service apparatus and method of providing the service using integrated internet and telephony service terminal**

(30) Priority: 15.03.2001 KR 2001013449
(71) Applicant: FL Technology Inc., Seoul (KR)
(72) Inventor: Dong-gyun, Kim, Bucheon-city, Kyongki-do (KR)
(74) Representative: Exell, Jonathan Mark

(57) **Abstract**

An on-line cash withdrawal and financial service apparatus and a method of providing the service using an integrated multimedia service terminal are provided in which an Internet browsing terminal, a public telephone, and a cash dispenser are integrated into a single terminal so that a user can be conveniently provided with a variety of services at one public place. An integrated multimedia service terminal for the on-line cash withdrawal and financial service apparatus includes: a liquid crystal display, a touch screen, a keyboard, a card reader, a vide camera, a dial keypad, a printer, a cash dispenser, and a controller for processing data provided from each constituent unit. The method of providing multiple services using the integrated service terminal involves: the integrated service terminal being ready to comply with a user's service request; determining whether a user has requested an on-line service for a predetermined period of time; if there is an on-line service request by the user, providing a telephone call service, an Internet service, or a financial service according the user's on-line service request; after the financial service is provided, determining whether to dispense cash to the user based on the result of the financial service; and if it is determined to dispense cash to the user, dispensing a predetermined amount of money requested by the user and printing a receipt out for the user.

## Description

The present invention relates to an on-line cash withdrawal and financial service apparatus and a method of providing the service using an integrated internet and telephony service terminal, and more particularly, to an on-line cash withdrawal and financial service apparatus and a method of providing the service, in which a multimedia service terminal integrated with an internet browsing terminal, a public telephone, and a cash dispense is used so that a user can be conveniently provided with a variety of services at one public place.

In general, dedicated terminals for browsing the Internet, making telephone calls and accessing financial services are separately installed at different locations. Therefore, an individual must move from place to place when he/she needs to access two or more services one after the other, which is inconvenient and wastes time and money. However, integrating such terminals for separate services into a single terminal is not easy because it involves a need of distributing the profit to many service providers. Therefore, there is a need for a new integrated service apparatus and a method of providing the integrated service, which are favorable to both users and service providers.

The present invention seeks to provide an on-line cash withdrawal and financial service apparatus and a method of providing the service using a multimedia service terminal integrated with an Internet browsing terminal, a public telephone, and a cash dispenser, which are convenient for the user since multiple services can be provided at one location, thus saving time and money.

According to one aspect of the present invention, there is provided an on-line cash withdrawal and financial service apparatus using an integrated internet and telephony service terminal comprising: a liquid crystal display which displays service data; a touch screen which allows a user to input data by touching; a keyboard which allows the user to input data; a card reader which allows the user to pay by credit card; a video camera which allows the user to communicate with the opposite party using picture data; a dial keypad which allows the user to dial a number that he/she wants to call; a printer capable of printing the data processed by each constituent unit; a cash dispenser which dispenses a predetermined amount of money the user who has passed his/her credit card through the card reader wishes to withdraw; and a controller which processes the data provided from each constituent unit.

It is preferable that the on-line cash withdrawal and financial service apparatus further comprises: an asymmetric digital subscriber line (ADSL) modem which transfers the data processed by the controller to a public ADSL; and a speaking board which enables the user to make a telephone call.

It is preferable that the liquid crystal display is a thin-film transistor liquid crystal display. It is preferable that the touch screen is a kind of optical touch screen. It is preferable that the card reader is compatible for both integrated circuit (IC) card and magnetic card. It is preferable that the printer is a thermal transfer type printer. It is preferable that the controller comprises a built-in local area network (LAN).

According to another aspect of the present invention, there is provided an on-line cash withdrawal and financial service apparatus comprising: at least one integrated service terminal capable of providing internet and telephony services and including a liquid crystal display, a touch screen, a keyboard, a card reader, a video camera, a dial keypad, a printer, a cash dispenser, a controller, an asymmetric digital subscriber line modem, a speaking board and a handset; a billing and management server which provides and manages a variety of services from the at least one integrated service terminal through the Internet for a user; a switch network which transmits a variety of services provided from the at least one integrated service terminal through the Internet to the user who is a wire-based or wireless subscriber; and a financial network which receives financial transaction request data input from the at least one integrated service terminal through the Internet and transmits the received financial transaction request data to a bank server or a card issuer server to provide the user with a requested financial service.

It is preferable that the at least one integrated service terminal provides the user through the Internet with web-to-call, web browsing, e-mail, contents retrieval, VolP (Voice-over-Internet Protocol), mobile communications, electronic commerce, reservation, ticket purchasing, a variety of types of applications, financial transactions, chatting, electronic POX (post office box), and free advertising call services.

It is preferable that the at least one integrated service terminal provides banking transaction services including cash dispensing, account-to-account fund transfer, account balance inquiry, and payment of bills, in conjunction with the bank server or the card issuer server.

It is preferable that the at least one integrated service terminal provides telephone call services paid for by cash, membership card, credit card, prepaid cash card, telephone card, or the person receiving the call, or in conjunction with home phone number or mobile phone number.

According to another aspect of the present invention, there is provided a method of providing an on-line cash withdrawal and financial service using an integrated service terminal, the method comprising: the integrated service terminal being ready to comply with a user's service request; determining whether a user has requested an on-line service for a predetermined period of time; if there is an on-line service request by the user, providing a telephone call service, an Internet service, or a financial service according the user's on-line service request; after the financial service is provided, determining whether to dispense cash to the user based on the result of the financial service; and if it is determined to dispense cash to the user, dispensing a predetermined amount of money requested by the user and printing a receipt out for the user.

It is preferable that the telephone call service includes private branch exchange (PBX) and VolP services, telephony and video communications services through data processing, and billing for the service. It is preferable that the Internet service includes web browsing, e-mail, contents retrieval, and e-commerce services, and billing for the service. It is preferable that the financial service includes a user authentication and transaction approval services for each transaction and each bank.

Examples of the present invention will now be described in detail, with reference to the accompanying drawings in which:
FIG. 1 is a diagram showing the structure of an on-line cash withdrawal and financial service apparatus utilizing an integrated internet and telephony service terminal;
FIG. 2 shows the configuration of a network of the on-line cash withdrawal and financial service apparatus of FIG. 1 connected to multiple integrated service terminals; and,
FIG. 3 is a flowchart illustrating a method of providing an on-line cash withdrawal and financial service using an integrated service terminal according to the present invention.

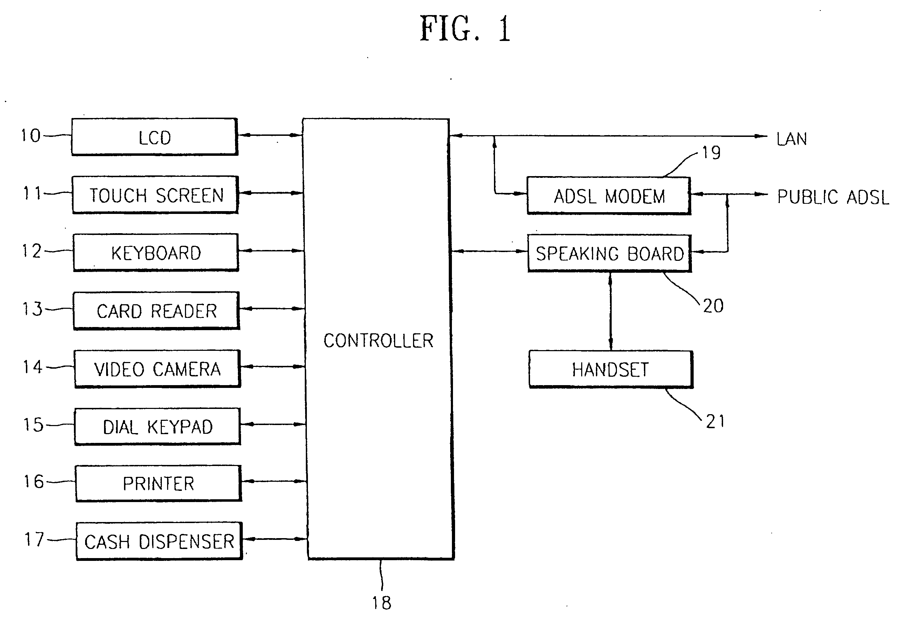

The configuration of an on-line cash withdrawal and financial service apparatus using an integrated internet and telephony service terminal according to the present invention is shown in FIG. 1. Referring to FIG. 1, the on-line cash withdrawal and financial service apparatus according to the present invention includes a liquid crystal display (LCD), a touch screen 11, a keyboard 12, a card reader 13, an video camera 14, a dial keypad 15, a printer 16, a cash dispenser 17, a controller 18, an asymmetric digital subscriber line (ADSL) modem 19, a speaking board 20, and a handset 21.

The TFT type LCD 10 displays a variety of transaction data. The touch screen 11, a kind of optical touch screen device, allows a user to input data by touching the screen. Also, the keyboard 12 allows the user to input data. The card reader 13, which is compatible for both IC and magnetic cards, allows the user to pay by credit card. The video camera 14 enables the user to communicate with the opposite party using picture data. The dial keypad 15 allows the user to dial a number that he/she wants to call.

The printer 16 is a thermal transfer type printer capable of printing data processed by each constituent unit. The cash dispenser 17 dispenses a predetermined amount of money the user who has passed his/her credit card through the card reader 13 wishes to withdraw. The controller 18 in which a LAN is embedded processes data provided from each constituent unit. The ADSL modem 19 transfers a variety of data processed by the controller 18 through a public ADSL. The speaking board 20 enables the user to make a telephone call using the handset 21.

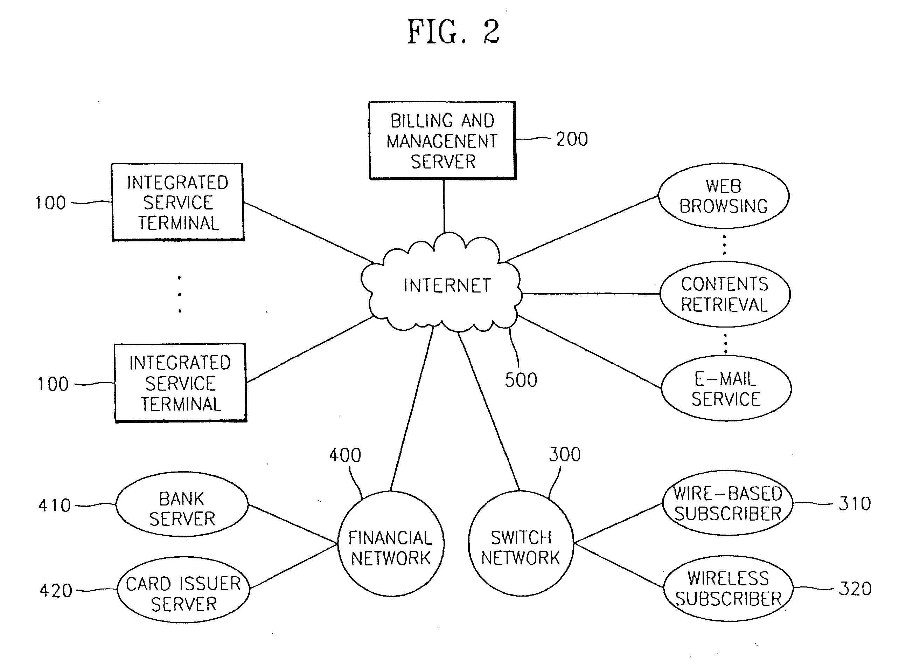

FIG. 2 shows the configuration of a network of the on-line cash withdrawal and financial service apparatus of FIG. 1 connected to multiple integrated service terminals. As shown in FIG. 2, at least one integrated service terminal 100, a billing and management server, a switch network 300, a financial network 400, the Internet 500 comprise the network of the on-line cash withdrawal and financial service apparatus according to the present invention.

Each integrated service terminal 100 comprises the LCD 10, the touch screen 11, the keyboard 12, the card reader 13, the video camera 14, the dial keypad 15, the printer 16, the cash dispenser 17, the controller 18, the ADSL modem 19, the speaking board 20, and the handset 21, which are shown in FIG. 1. The integrated service terminal 100 provides the user through the Internet 500 with a variety of services such as web-to-call, web browsing, e-mail, contents retrieval, VolP (Voice-over-Internet Protocol), mobile communications, electronic commerce, reservation, ticket purchasing, a variety of types of applications, financial transactions, chatting, e-POB (post office box), and free advertising call services. The billing and management sever 200 provides and manages a variety of services from the integrated service terminal 100 through the Internet 500 for the user. The integrated service terminal 100 provides, in conjunction with a bank server 410 or a card issuer server 420, banking transaction services, such as cash dispensing, account-to-account fund transfer, account balance inquiry, and payment of bills, and telephone call services paid for by cash, membership card, credit card, prepaid cash card, telephone card, or the person receiving the call, or in conjunction with home telephone number or mobile phone number.

The switch network 300 provides a variety of services provided from the integrated service terminal 100 through the Internet 500 to a wire-based subscriber 310 and a wireless subscriber 320. The financial network 400 receives financial transaction request data input from the integrated service terminal 100 through the Internet 500 and transmits the received financial transaction request data to the bank server 410 or the card issuer server 420 to provide the user with a requested financial service.

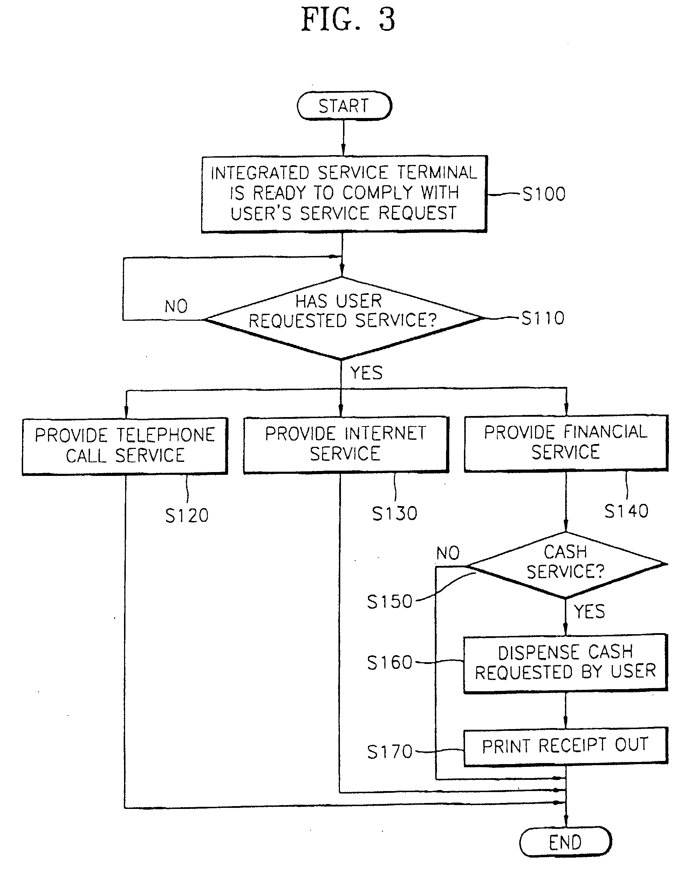

FIG. 3 is a flowchart illustrating a method of providing an on-line cash withdrawal and financial service using an integrated service terminal according to the present invention.

Referring to FIG. 3, the integrated service terminal 100 of FIG. 2 is ready to comply with a user's service request (step S100). It is determined whether the user has requested an on-line service for a predetermined period of time (step S110). If there is an on-line service request by the user, according to the user's on-line service request, a telephone call service (step S120), an Internet service (step S130), or a financial service (step S140) is provided. The telephone call service in step S120 includes private branch exchange (PBX) and VolP services, telephony and picture communications services through data processing, and billing for the service. The Internet service in step S130 includes a web browsing, e-mail, contents retrieval, e-commerce, and billing for the service. The financial service in step S140 includes a user authentication and transaction approval service for each transaction and each bank.

After step S140 is complete, it is determined whether to provide cash to the user according to the user's request based on the result of step S140. If it is determined in step S150 to provide cash to the user, the integrated service terminal 100 dispenses an amount of money requested by the user (step S160) and prints a receipt (step S170) out for the user.

In the on-line cash withdrawal and financial service apparatus and the method of providing the service using an integrated multimedia terminal according to the present invention, it is convenient for a user, in terms of time and money, to utilize the integrated multimedia terminal for multiple transactions. Also, the service provider can reduce installation and maintenance expenses because multiple services can be provided at one location using a single integrated multimedia terminal. The service provider operating the integrated multimedia terminal is expected to yield a high profit. The provision of integrated information useful for everyday living to a number of users leads to an advanced information-based society.

While this invention has been particularly shown and described with reference to preferred embodiments thereof, it will be understood by those skilled in the art that various changes in form and details may be made therein without departing from the scope of the invention as defined by the appended claims.

## Claims

1. An on-line cash withdrawal and financial service apparatus using an integrated internet and telephony service terminal comprising:
a liquid crystal display which displays service data;
a touch screen which allows a user to input data by touching;
a keyboard which allows the user to input data;
a card reader which allows the user to pay by credit card;
a video camera which allows the user to communicate with the opposite party using picture data;
a dial keypad which allows the user to dial a number that he/she wants to call;
a printer capable of printing the data processed by each constituent unit;
a cash dispenser which dispenses a predetermined amount of money the user who has passed his/her credit card through the card reader wishes to withdraw; and
a controller which processes the data provided from each constituent unit.

2. The on-line cash withdrawal and financial service apparatus of claim 1, further comprising:
an asymmetric digital subscriber line (ADSL) modem which transfers the data processed by the controller to a public ADSL; and
a speaking board which enables the user to make a telephone call.

3. The on-line cash withdrawal and financial service apparatus of claim 1 or 2, wherein the liquid crystal display is a thin-film transistor liquid crystal display.

4. The on-line cash withdrawal and financial service apparatus of claim 1, 2 or 3, wherein the touch screen is a kind of optical touch screen.

5. The on-line cash withdrawal and financial service apparatus of any preceding claim, wherein the card reader is compatible for both integrated circuit (IC) card and magnetic card.

6. The on-line cash withdrawal and financial service apparatus of claim 1, wherein the printer is a thermal transfer type printer.

7. The on-line cash withdrawal and financial service apparatus of any preceding claim, wherein the controller comprises a built-in local area network (LAN).

8. An on-line cash withdrawal and financial service apparatus comprising:
at least one integrated service terminal capable of providing internet and telephony services and including a liquid crystal display, a touch screen, a keyboard, a video camera, a dial keypad, a printer, a cash dispenser, a controller, an asymmetric digital subscriber line modem, and a handset;
a billing and management server which provides and manages a variety of services from the at least one integrated service terminal through the Internet for a user;
a switch network which transmits a variety of services provided from the at least one integrated service terminal through the Internet to the user who is a wire-based or wireless subscriber; and
a financial network which receives financial transaction request data input from the at least one integrated service terminal through the Internet and transmits the received financial transaction request data to a bank server or a card issuer server to provide the user with a requested financial service.

9. The on-line cash withdrawal and financial service apparatus of claim 8, wherein the at least one integrated service terminal provides the user through the Internet with web-to-call, web browsing, e-mail, contents retrieval, VolP (Voice-over-Internet Protocol), mobile communications, electronic commerce, reservation, ticket purchasing, a variety of types of applications, financial transactions, chatting, electronic POX (post office box), and free advertising call services.

10. The on-line cash withdrawal and financial service apparatus of claim 8 or 9, wherein the at least one integrated service terminal provides banking transaction services including cash dispensing, account-to-account fund transfer, account balance inquiry, and payment of bills, in conjunction with the bank server or the card issuer server.

11. The on-line cash withdrawal and financial service apparatus of claim 8, 9 or 10, wherein the at least one integrated service terminal provides telephone call services paid for by cash, membership card, credit card, prepaid cash card, telephone card, or the person receiving the call, or in conjunction with home phone number or mobile phone number.

12. A method of providing an on-line cash withdrawal and financial service using an integrated service terminal, the method comprising:
the integrated service terminal being ready to comply with a user's service request;
determining whether a user has requested an on-line service for a predetermined period of time;
if there is an on-line service request by the user, providing a telephone call service, an Internet service, or a financial service according the user's on-line service request;
after the financial service is provided, determining whether to dispense cash to the user based on the result of the financial service; and
if it is determined to dispense cash to the user, dispensing a predetermined amount of money requested by the user and printing a receipt out for the user.

13. The method of claim 12, wherein the telephone call service includes private branch exchange (PBX) and VolP services, telephony and picture communications services through data processing, and billing for the service.

14. The method of claim 12 or 13, wherein the Internet service includes web browsing, e-mail, contents retrieval, and e-commerce services, and billing for the service.

15. The financial service method of claim 12, 13 or 14, wherein the financial service includes a user authentication and transaction approval services for each transaction and each bank.

16. A computer program comprising computer program code means for performing all the steps of any of claims 12 to 15 when said program is run on said integrated service terminal.

17. A computer program as claimed in claim 16 embodied on a computer readable medium.
